# EUROPEAN PATENT APPLICATION

(11) **EP 1 267 252 A1**
(43) Date of publication of application: **18.12.2002**
(21) Application number: 01912270.4
(22) Date of filing: 12.03.2001
(51) Int. Cl.: G06F 3/00, G06F 13/00, H04N 7/08

(54) **INFORMATION DISPLAY AND INFORMATION PROVIDING DEVICE**

(30) Priority: 21.03.2000 JP 2000083290
(71) Applicant: Sony Corporation, Tokyo 141-0001 (JP)
(72) Inventor: KATO, Kosuke, c/o SONY CORPORATION, Shinagawa-ku, Tokyo 141-0001 (JP); HARADA, Tadanori, c/o SONY CORPORATION, Shinagawa-ku, Tokyo 141-0001 (JP)
(74) Representative: Ayers, Martyn Lewis Stanley
(86) International application number: JP0101914
(87) International publication number: WO01071466

(57) **Abstract**

An information display apparatus operable in such a case wherein the information for specifying the picture information to be displayed is distributed along with the main display information and wherein the picture information specified is acquired through a path different from the supply path of the main display information. The information display apparatus includes an information extraction unit and a display controller. The information extraction unit extracts, from the main display information, the picture specifying information and the picture information, the main display information and the picture specifying information, while acquiring, from an information source lying in a separate information path of a transmission form different from the form in which the main display information is transmitted, the picture information including the related information corresponding to the picture specifying information. The display controller displays, in combination, a first management area for displaying a first picture, a second management area and the main display information extracted from the information extraction unit.

## Description

### Technical Field

The present invention relates to an information displaying apparatus and an information purveying apparatus useful when used mainly in a digital television system, in which an operation on the part of an operator may be carried out extremely readily, using the information pertinent to a picture displayed on a display device as a clue.

More particularly, the present invention relates to a displaying apparatus for displaying the main display information obtained from an information source, which receives picture data distributed with the main display information and including related information such as a network address or a program component and displays it, by which network access is made easier.

### Background Art

Recently, with the Internet coming into widespread use, the number of servers accessible from terminals connected to the Internet is drastically increasing. In each server, a variety of information is recorded in accordance with the intention of the supervisor, such that a terminal operator is able to acquire the information by accessing the server from his or her terminal. In general, an operator willing to access the information on the Internet inputs a letter string termed URL from his or her terminal.

It should be noted that a terminal operator is generally highly likely to access the specified information on specified particular servers. Thus, in order to permit the terminal operator to access the information with a small number of operating steps, there is provided a function known as a bookmark. In the bookmark function, the identification of the information in question is represented by a sole letter string or a sole picture or icon. The operator selects and identifies the information, using the letter string as a clue, to access the so identified information. By this function, the information can be accessed more speedily for information identification than if a letter string such as URL is input to identify the information.

Meanwhile, the above-described technique is used not only in the personal computers, but has come to be applied extensively in the field of domestic electrical appliances in general. In particular, in an information terminal, termed digital television, not only is the broadcast simply received, but the system is connected to the network, in order to permit the information terminal to access the specified information.

As the pertinent technique, the Japanese Laying-Open Publication H-11-53441 discloses an information processing method in which the icon information in broadcast signals is displayed, and in which, if a user clicks the icon, a home page for electronic transactions is accessed by TCP/IP connection. The Japanese Laying-Open Publication H-9-27936 discloses a method in which the cinema-related information is displayed simultaneously with the cinema to enable on-demand accessing, while the Japanese Laying-Open Publication 2000-201317 discloses a method in which data attendant on picture data is stored in a memory medium for accessing subsequently.

### Disclosure of the Invention

It is an object of the present invention to provide a novel information display apparatus and an information purveying apparatus which attenuate the above-described disadvantages that the prior art technique presents.

It is another object of the present invention to provide a display apparatus operable in case the picture information to be displayed along with the main display information is distributed, for attenuating the above-mentioned disadvantages. The main display information means the totality of the information which will stimulate the human visual system for transmission.

That is, the present invention provides an information display apparatus for displaying, in combination, a first management area for displaying a first picture, a second management area and the main display information extracted by the information extraction unit.

The information extraction unit operates in such a manner that, when there is distributed the picture information to be displayed along with the main display information, the main display information and picture data including the related information will be extracted from the distributed information set.

The display controller operates for displaying, in combination, a first management area for displaying a first picture, a second management area and the main display information extracted by the information extraction unit.

The first management area is an area of a preset size on a display device and operates for displaying the picture data including the related information therein and for enabling picture data therein to be registered in a second management area according to the user's intention.

The second management area is an area of a preset size on a display device and operates for displaying therein picture data including the related information and for enabling the related information included in the picture data therein to be recognized according to the user's intention as well as for enabling the selection of an optional one of the plural related information.

It should be noted that the main display information, first management area and the second management area may be displayed selectively or in optional combination, instead of being displayed simultaneously.

It is another object of the present invention to provide a display apparatus operable in case the picture specifying information for specifying the picture information to be displayed, and the so specified picture information are distributed along with the main display information, for attenuating the disadvantages that the above-described conventional art presents.

Thus, the present invention provides an information display apparatus having an information extraction unit and a display controller.

The information extraction unit operates for extracting the main display information and the picture specifying information from the information set including the main display information, the picture specifying information and the picture information.

Meanwhile, the picture specifying information is the information for specifying a picture including the included related information, such as a filename, and operates for handling the picture information with a sole keyword.

As in claim 3, the display controller operates for displaying, in combination, a first management area for displaying a first picture, a second management area and the main display information extracted by the information extraction unit.

It is another object of the present invention to provide a display apparatus operable in case the information for specifying the picture information to be displayed is distributed along with the main display information, and in which the so specified picture information is acquired through a path different from a supply path of the main display information, for attenuating the disadvantages that the above-described conventional art presents..

To this end, the present invention provides a novel information display apparatus having the information extraction unit and the display controller.

The information extraction unit operates for extracting the main display information and the picture specifying information from the set of the information including the main display information, picture specifying information and the picture information, and for acquiring, from an information source, lying on another information route, the picture information which is associated with the picture specifying information and which includes the related information.

Meanwhile, the picture specifying information is the information for specifying a picture including the included related information, such as a filename, and operates for handling the picture information with a sole keyword.

The display controller operates for displaying, in combination, a first management area for displaying a first picture, a second management area and the main display information extracted by the information extraction unit.

It should be noted that the separate route means assuming a transmission form different from the transmission form for the main display information. For example, if the main display information is being transmitted from a broadcasting station in a bitstream modulated at a different carrier frequency, the picture information may be transmitted in another bitstream modulated by a different carrier frequency. There may also be a case wherein, as the main display information is transmitted from a broadcasting station in a bitstream modulated at a certain carrier frequency, the picture information may be transmitted over a telephone network.

It is another object of the present invention to provide an information purveying apparatus for sending, in superposed state, the main display information and the information corresponding to the main display information and which is adapted for specifying a first picture having the related information included therein, to an information display apparatus displaying a first management area for displaying a first picture, a second management area and the main display information. The information display apparatus determines a second picture when an operator has specified a first picture, based on the first picture specified, to display the second picture in the second management area, whilst the information display apparatus displays the related information included in an information entity pertinent to the second picture when a specifying operation is made on the second picture to make the related information selectable.

To this end, the present invention provides an information display apparatus for superposing the main display information and the information for specifying the first picture having the included related information, and for sending the resulting information.

Other objects, features and advantages of the present invention will become apparent from the following description of preferred embodiments thereof and the claims.

### Brief Description of the Drawings

Fig.1 shows a typical layout of each frame on a display device in a digital television.
Fig.2 shows a typical structure of an embodiment of the present invention.
Fig.3 shows a typical structure of the sub-information of an embodiment of the present invention.
Fig.4 shows variations of information sources of the main display information, first picture specifying information and the first picture information of an embodiment of the present invention.
Fig.5 shows typical embedding of the related information in an embodiment of the first picture information embodying the present invention.
Fig.6 shows another typical embedding of the related information in an embodiment of the first picture information embodying the present invention.

### Best mode for Carrying out the Invention

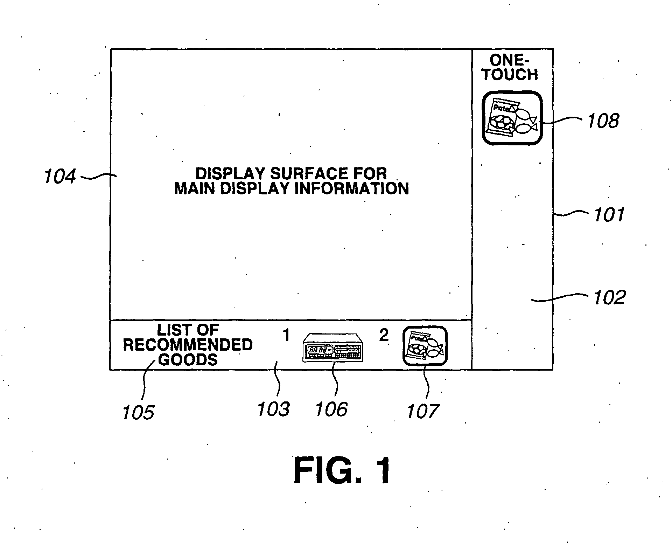

Referring to Figs.1 to 6, preferred embodiments of the present invention are hereinafter explained.

### (Related Information)

First, the related information, as a concept used in common in the present invention, is explained.

The related information is the information as the basis when it is desired to let the viewer execute a specified operation, with the picture information as a clue, and means the totality of the information included in the picture information. Specifically, the related information is the information correlated with the icon or the included picture information. By way of an example, the related information is the information specifying the information which is stored in a particular server and which is desired to be referenced by the viewer, such as URL or IP address. If a particular program is desired to be operated, the name of the program or the program itself may be included in the related information.

### (Picture information including the information)

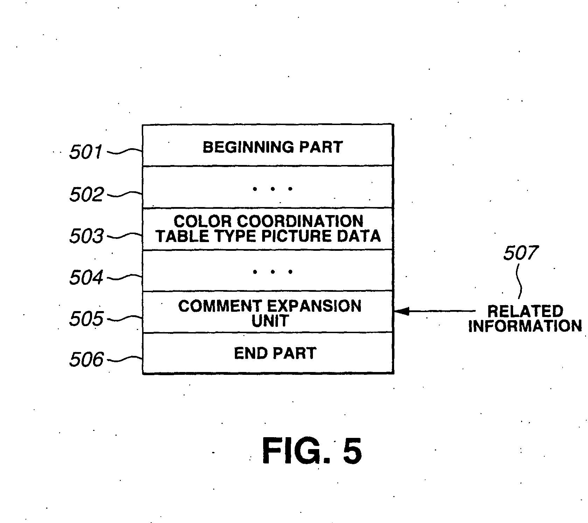

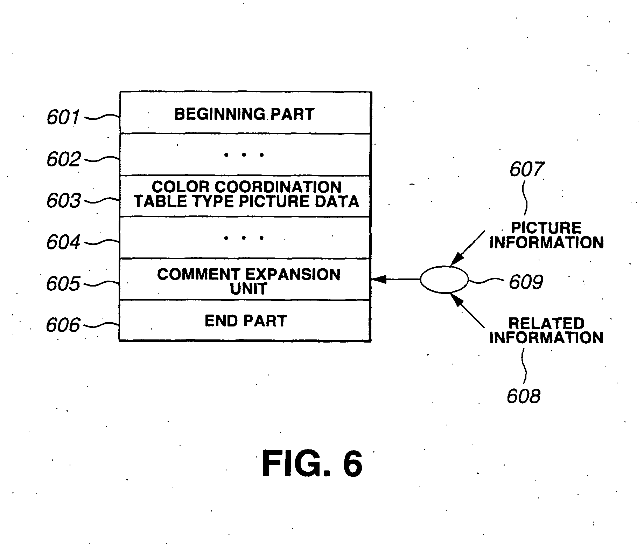

The picture information including the information, which is the common concept used in the present invention, is now explained with reference to Figs.5 and 6. The information to be included may be an identifier for specifying the related information and the picture.

Fig.5 shows a typical format of the picture information having the related information embedded therein.

Although the picture information shown herein is the GIF format picture, the picture information format is not limited to the GIF type format, but also the JPG or PCX type format.

A beginning portion 501 is a field provided for identifying the present information to be the GIF format picture information, and is comprised of a letter array "GIF" with its version.

The pixels of color coordination table type picture data 503 is picture data arranged from left to right and from top to bottom. The color coordination table type picture data are coded using an LZW algorithm which is the variable-length code.

A comment expansion unit 505 includes the sentence information which is not the graphics information in the GIF datastream. This may comprise the graphics, names of production-related parties or persons or the comment on the contents and all other items not pertinent to control or graphics data.

An end portion 506 indicates the end of the datastream and denotes that there is no other parameter information as from the end portion 506.

A blank 502 between the beginning portion 501 and the color coordination table type picture data 503 and a blank 504 between the color coordination table type picture data 503 and the comment expansion unit 505 contain the other information. To these blanks, there are allocated the information including parameters such as, for example, a picture width, a picture height or the color resolution defining the area of the display device necessary for pictures now to be drawn.

The related information 507 is arrayed in the comment expansion unit 505 directly or after encryption or the like processing to form a compact set of the picture information.

The result is that the related information or identifiers may be included in the picture information such as the datastream.

Although the above explanation is based on the GIF format, it is sufficient that the picture forms of other format typ are recorded in an area distinct from the picture information.

The form of embedding in other picture information is explained with reference to Fig.6. Fig.6 shows another typical format of the picture information having the related information embedded therein.

Here again, a picture of the GIF format is taken as an example in the picture information. In the present embodiment, the JPEG or PCX system, for example, may be adopted as the format in place of the GIF format.

The beginning portion 601 is a field provided for identifying the present information to be the picture information of the GIF format. To this field is allocated the letter string "GIF" and its version.

In the color coordination table type picture data 603, the picture data comprised of pixels arranged from left to right and from top to bottom are to be arranged. Here, the picture information 607 and the related information 608 are made to co-exist in a watermark system and are mixed together at mix 609 so that the related information cannot be directly viewed but the picture information can be directly viewed. The information, thus mixed at mix 609, is encoded using an LZW algorithm of the variable length code.

The comment expansion unit 605 includes the sentence information that cannot become the graphic information in the GIF datastream. Although the comment expansion unit 605 is not particularly required in the present embodiment, it can be used as necessary by the information purveyor by free definition.

The end portion 606 indicates that the datastream has come to a close without being followed by other information, such as parameter information.

Although the GIF format is used in the present typical pictures, any other suitable format picture system may be used, provided that it is recorded in an area distinct from the picture information.

### (Graphic image displayed in a display terminal)

Referring to Fig.1, typical graphic images displayed on a display terminal pertinent to the present invention is explained.

A display screen 101 operates to permit a human being to visually grasp the information from a display apparatus, such as a Braun tube display surface, TFT liquid crystal screen, or a screen of a display unit built into spectacles carried by the human being. Although the boundary portion of the display screen 101 is the outermost rim of the display device, the frame may also be displayed in the display device.

A one-touch frame 102 is a frame in which to display at least an icon 108 (or picture information, such as a photograph, hereinafter the same). If the viewer of the present information display apparatus specifies the icon 108 by operating means, not shown, at least one related information is displayed in the one-touch window so that a certain processing is booted on the basis of this displayed information. If there are plural information, one of these is selected so that a certain processing is booted on the basis of this selected information. That is, the one-touch frame 102 on the display screen 101 acts as a particular management area for guiding the specified operation, with the icon 108 as clues, so that the viewer is able to realize a new operation with the icon(s) displayed in this area as a clue.

An information purveying frame 103 is a frame in which to display at least icons 106, 107. If the viewer of the present information display apparatus has specified the icon displayed in the frame, a new icon is added to the one-touch frame 102 based on this icon specifying operation.

It should be noted that the icon added at this time in the one-touch frame 102 may be the icon specified and displayed in the information purveying frame 103 or may be replaced by another icon as necessary. In the information purveying frame 103, there may be displayed the letter information 105 in addition to the icons. That is, the information purveying frame 103 on the display screen 101 operates as a special management area in which icons etc are displayed to stimulate the viewer's interest and also in which the viewer is able to perform the operation of specifying the icon to lead to registration on the one-touch frame 102.

Meanwhile, if, as to a particular operation by the viewer of the main display, a pointing device, such as a mouse, is provided in the operating means, a user interface technique of so-called drag and drop of specifying an icon desired to be registered by a pointer and moving the icon on the one-touch frame 102 to drop it there may be used.

An information display surface 104 is a frame in which to display the content, such as movie in digital broadcast, and is an area utilized by the viewer to display the information desired to be acquired. Meanwhile, the content means the totality of the information stimulating the human visual system for information transmission, such as still picture or teletext information, without being limited to the moving pictures. (First embodiment)

### (Structure)

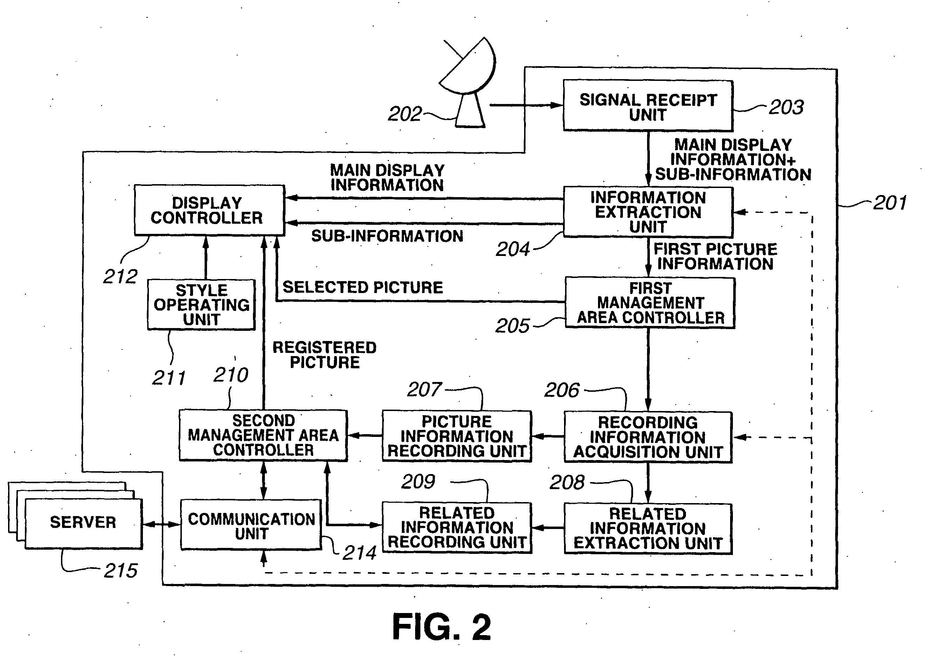

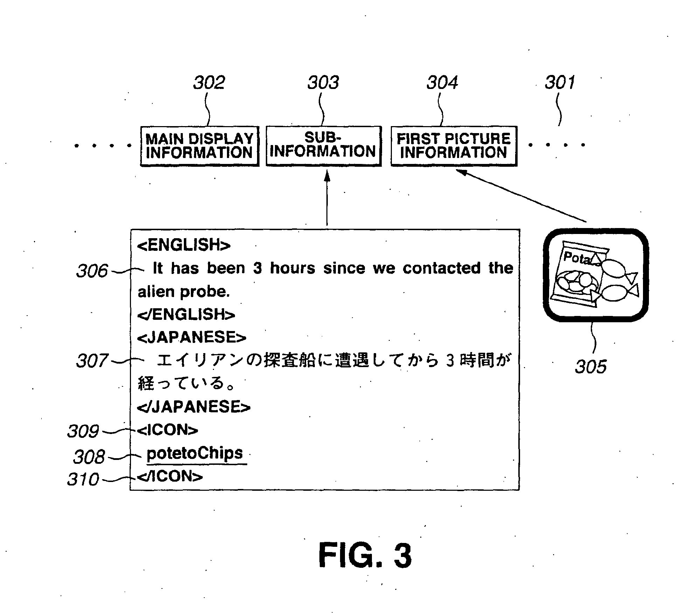

In the first embodiment of the present invention, illustrative structures of a display terminal 201 and peripheral portions thereof are explained with reference to Figs.2 and 3.

An antenna 202 is e.g. a parabola antenna for a satellite and captures high frequency signals modulated with the digital information.

A signal receipt unit 203 is e.g., a digital tuner receiving high frequency signals captured by the antenna 202 to take out the modulated digital signals which are subsequently converted into a digital signal string.

Referring to Fig.3, the digital signal string, thus acquired, is explained. The digital signal string of the present embodiment includes the main display information 302, sub-information 303 and the first picture information 304.

The main display information 302 includes not only the moving picture information but all sorts of information that is able to cause stimulus in the human visual system for transmission, such as still picture information. Therefore, this information may be the information of the MPEG format for moving pictures or the information of the JPEG format for still pictures, in addition to being the simple text information of the HTML system. The accompanying speech information may also be superimposed thereon.

The sub-information 303 is the information associated and transmitted with the main display information 302. For example, if the main display information 302 is a cinema, the sub-information 303 may be the speech uttered in the cinema scene. If the text information of the XML form is included as this sub-information, the speech in English 306 and the speech 307 in Japanese may form and include an information package by respective XML tags.

In the sub-information 303, there may be included the picture specifying information 308 as the information for specifying an icon displayed in the information purveying frame 103. This picture specifying information 308 is surrounded by a beginning tag 309 and an end tag 310, indicating an XML information unit, in order to show that this picture specifying information is the information for specifying the icon.

The first picture information 304 is an icon 305 including the related information. This icon is provided with an identifier for specifying the present icon. For example, an identifier [PotatoChips] is provided for the present icon for identifying it. Since the picture specifying information 308 for specifying the icon included in the sub-information 303 is the sane identifier, the icon specified by the sub-information is determined to be denoting the PotatoChips 305.

Reverting to Fig.2, explanation on the structure is continued.

An information extraction unit 204 is connected to the signal receipt unit 203 and is adapted for speparating the main display information and the sub-information as extracted to output the main display information and the sub-information as well as to output the first picture information including the related information therein. If, in this case, the first picture information is included in the information obtained for the antenna, data may be acquired from this signal. If connection is made to e.g., a network, the first picture information may be requested and acquired from the network. In this case, the information extraction unit 204 is connected in order to permit information transmission/reception to or from a communication unit 214 as later explained.

A first management area controller 205 is connected to the information extraction unit 204 for receiving the first picture information and for controlling the operations performed on a information purveying frame 103 displayed on the display device. Specifically, the first picture information received is displayed as icons 106, 107 on the information purveying frame 103 and, if the viewer has specified the icon by operating means, not shown, notification is made to a recording information acquisition unit 206 to indicate carrying out the processing pertinent to the icon. The information purveying frame 103 may indicate not only the icon but also the text information 105. To this end, however, an information unit provided separately in the sub-information, is used. In such case, the text information 105 is extracted from the digital signal string the information extraction unit 204 has received from the information source. The first management area controller 205 acquires the text information extracted by the information extraction unit 204 for display. By so doing, the information purveying in the information purveying frame may be rich in variations.

The recording information acquisition unit 206 is connected to the first management area controller 205 and, when it is detected in the first management area controller 205 that a viewer has specified an icon from operating means, the recording information acquisition unit 206 specifies which is the icon so specified, and acquires the first picture information pertinent to the icon.

A picture information recording unit 207 is connected to the recording information acquisition unit 206 and is adapted for storing the picture information acquired by the recording information acquisition unit 206 either directly or as it is converted in a preset code. The so-stored picture information is furnished to a picture display forming unit 908 so that the recorded picture information will be displayed in the one-touch frame 102.

A second management area controller 210 is connected to a picture information recording unit 207 to perform communication to display the icon recorded in the picture information recording unit 207 in the one-touch frame 102. If the operator has specified the icon 108 displayed in the one-touch frame through operating means, the second management area controller 210 makes an inquiry at a related information recording unit 209, as later explained, so that the operation can be initiated based on the related information. If there are plural related information, it suffices to perform control to cause the candidates for selection to permit the operator to select one of the related information. The operator may select the related information to enable the operation to be started based on the selected related information. If the related information is comprised of the single information, it is of course possible to confirm its contents to initiate the operation based on the related information.

A related information extraction unit 208 is connected to the recording information acquisition unit 206, so that, in case a notification is made from the first management area controller for performing the processing pertinent to the icon, the related information extraction unit 208 is able to acquire the picture information, so acquired, to extract the related information included in the picture information.

The related information recording unit 209 is connected to the related information extraction unit 208 and to the second management area controller 210 to record the related information extracted by the related information extraction unit 208 along with the pertinence relation information with respect to the icon. When informed by the second management area controller 210 that the icon has been specified, the related information recording unit 209 notifies the related information pertinent to the icon in question to the second management area controller 210.

A style operating unit 211 determines the layout of each frame, under a command from operating means, not shown, for thereby affording a control value to the display control unit. Meanwhile, the style is the information for prescribing the layout of the information to be displayed, the size of the letter and so forth.

A display control unit 212 is connected to outputs of the information extraction unit 204, first management area controller 205 and the second management area controller 210 in order to display the main display information, the information display-controlled by the first management area controller 205 so as to be displayed in the information purveying frame 103, and the information display-controlled by the second management area controller 210 so as to be displayed on the one-touch frame 102, on a display device, not shown, provided in the present information display apparatus. Since the display control unit 212 is also connected to the style operating unit 211, the display is made in accordance with the style specified by the style operating unit 211. If the viewer with a weak visual acuity intends to enlarge the letter size, he or she gives a corresponding command from the style operating unit 211, whereupon the display control unit 212 manages control to display the text information 105 generated by the first management area controller 205 to an enlarged scale.

As the style, default values may be used, in which case it is unnecessary to implement the style operating unit 211. Although the display control unit 212 performs layout control as the main display information, information purveying frame and the one-touch frame co-exist. However, there is no necessity of displaying these in their entirety. For example, only the main display information, only the information purveying frame, only the one-touch frame, only the main display information and the information purveying frame or only the main display information and the one-touch frame may be selectively displayed. In this case, it suffices that the corresponding decision is given under a command issued from the style operating unit 211.

From the information extraction unit 204, not only the main display information but also the sub-information may be acquired. Since there are occasions where the speech of a cinema by a variety of languages and the information pertinent to the main information are included in the sub-information, as described above, it may be a designing alternative whether or not such information is to be displayed in superposition on e.g., the frame 104 for displaying the main display information or the information purveying frame 103. In this case, it is sufficient that the command of the style operating unit 211 is followed in selecting on which frame the sub-information is to be superimposed. It is also a designing alternative to make selective display of one of the same sorts of information units 306, 307, such as the information in English or in Japanese.

The communication unit 214 is an interface for carrying out bi-directional communication with an external environment of the present information display apparatus 201, such as modem connected to the telephone network or an ISDN terminal adapter, and is connected to the second management area controller 210. If the operation determined by the second management area controller is connected to the external server 215 to acquire the information, the control unit 214 is able to make the connection and information transmission/reception.

### (Operation)

A typical operation pertinent to an embodiment of the present invention is explained.

First, in an information purveying site, not shown, it is presupposed that the sub-information is superimposed in broadcasting in addition to picture content such as cinema as shown in Fig.3. In the following explanation, it is presupposed that the content is a cinema including such a scene in which a space vehicle of the earth encounters an explorer ship from outside the earth, looking like a potato, and reports to an earth army that three hours have elapsed in this state, with the conversation for this scene being in English.

It is also presupposed that, by the setting of the style operating unit 211 and the operation of the display control unit 212, the main display information is displayed on the display surface of the main display information, an icon supervised by the first management area controller 205 is displayed as the information purveying frame on the display device, and that the icon is displayed as a one-touch frame on the display device.

### (Generation of information distributed)

First, a manager of an information purveying site embeds a URL address of a so-called catering service site making a delivery sale of potato chips in an icon presenting a picture of potato chips by a technique explained with reference to Figs.5 and 6. The manager also creates the sub-information in the above scene. If the speech portion 306 for this scene in English is included in the sub-information, the Japanese viewer desirous to comprehend the contents in Japanese will naturally be at a loss. In order to cope with this, the information purveyor adds caption data in Japanese. Of course, the respective language texts are provided with e.g., XML tags to permit the information display apparatus to separate them from one another. The information on the commercial articles, the marketing for which is desired by the information purveyor, is simultaneously included in this sub-information. In the case of the present scene, in which an explorer vessel looking like a potato is displayed on an information display apparatus, owned by the viewer, the information purveyor surmises that the viewer will feel inclined to purchase potato chips mentally associated with the potato shape of the space vessel. So, the picture specifying information 308 pertinent to an icon of potato chips is included as the first picture information. That is, the picture specifying information 308 is the information specifying the URL address of the catering service site.

The main display information and the sub-information, thus created, are superimposed together. The resulting superimposed information is modulated with a preset carrier wave and distributed over e.g., a satellite to the viewer.

### (Operation from signal reception to display of the information purveying frame)

The reception operation in the information display apparatus is now explained. If the distributed information is received by the antenna 202, it is transmitted to the signal receipt unit 203 and decoded for conversion to a preset digital signal string. The digital signal string, resulting from the conversion, is transmitted to the information extraction unit 204 for decoding the information.

The main display information and the sub-information, resulting from the decoding operation, are transmitted to the information extraction unit 204.

In the information extraction unit 204, the main display information and the sub-information are transmitted to the display control unit 212, while the picture specifying information 308 contained in the sub-information is extracted and used as a clue to acquire the picture information having the corresponding related information included therein. If the picture information having the corresponding related information included therein is included in the digital signal string acquired through the satellite, the information is acquired therefrom, whereas, if the picture information is acquired through other communication networks, the information is acquired through the communication unit 214 from the external server 215.

The picture information, having the so acquired related information, included therein, is transmitted to and managed by the first management area controller 205. Consequently, there is displayed, on the screen being seen by the viewer, an icon 107 representing potato chips, which is an article of commerce being marketed by the information purveyor, as shown in Fig.1.

### (Icon selecting operation by the viewer and apparatus behavior)

If the above processing is finished, the viewer is then able to proceed to register an icon. In the viewer is interested in the potato chips, he or she specifies the icon 107 by operating means, not shown, to proceed to register the icon for later invoking.

If this operation is finished, the first management area controller 205 is responsive to the command for registration to specify the icon in question 107 to command the recording information acquisition unit 206 to register the icon by the second management area controller.

The recording information acquisition unit 206 is responsive to the command for registration from the first management area controller 205 to acquire the icon to transmit its data to the picture information recording unit 207 and to the related information extraction unit 208.

The picture information recording unit 207 records a picture data portion of the icon specified for registration. The recording contents are communicated to the second management area controller 210 for display on the one-touch frame 102.

On the other hand, the icon, including the related information therein, is also communicated to the related information extraction unit 208, where the information is recorded in the related information recording unit 209.

### (Operation of the viewer based on the related information and the apparatus behavior)

When the above-described operation is finished, the icon the viewer wished is displayed on the one-touch frame 102, so the viewer is able to perform various processing operations on this one-touch frame.

That is, in the present embodiment, the viewer has the icon pertinent to potato chips registered on the one-touch frame, and is able to specify a potato chip icon 108 on the one-touch frame to purchase the goods pertinent to the icon or to check for its inventory based on the related information pertinent to this icon.

If the above operation is performed, the information display apparatus 201 detects, by the function of the second management area controller 210, to which of the icons recorded in the picture information recording unit 207 corresponds the specified icon. The related information of the icon corresponding to the icon is read out from the related information recording unit 209 and, if the icon has plural related information, the plural related information are displayed on certain portions of the display surface to await the selection by the viewer. If the selection by the viewer is performed, or if there is only one related information, the operation is determined based on the related information to perform the operation. Specifically, if the specified information is extracted from the server in the specified address, that effect is notified to the communication unit 214 to accept data from the server to display the data in a certain portion of the display device. If a program is to be booted, the program is executed. If the program is embedded as the related information, that program is executed, whereas, if the program is pre-recorded in the information display apparatus 201, that processing is executed.

By driving the information display apparatus as described above, the viewer is able to acquire the information effectively from the information purveyor, as well as to select the corresponding operation readily, thus achieving effective information purveying on the part of the information purveyor.

### (Second embodiment)

The second embodiment as a modification of the first embodiment of the present invention is hereinafter explained.

As for the first embodiment, it is presupposed that the main display information, sub-information and the information pertinent to the icon, as the first picture information, are obtained from the antenna. From the reason of the network structure, there are occasions where the main display information can be acquired using the satellite communication, whilst the sub-information and the icon as the first picture information can be acquired using another communication path, such as telephone network.

The digital signal string, obtained in such case, that is the digital signal string acquired on decoding by the information extraction unit 204, may be such a digital signal string from which the main display information, sub-information and the first picture information, are ultimately obtained. That is, it is unnecessary for the information to be acquired in their entirety from the antenna 202, but one or more of the information may be acquired for another digital signal line, such as XDSL or WLL. In such case, the information extraction unit 204 may also be connected to the communication unit 214 such that the information from these other routes may be acquired from the communication unit 214 (see signal flow indicated by a broken line in Fig.2).

It does not matter whether the main display information, sub-information and the first picture information are acquired from the antenna, whether these are not superposed on a signal of the same frequency, or whether they are sent out by another frequency. In such case, it is sufficient that the respective information is acquired by demodulation from two or more carrier frequencies in the signal receipt unit or by demodulation in another code system if the broadcast is of the spread-spectrum system.

If there is a control path capable of transmitting the main display information, a communication system other than the satellite communication path may be used. In such case, the antenna 202 or the signal receipt unit 203 may be eliminated.

Moreover, the communication path used may also be a server enclosed in the present apparatus, without being limited to an external environment connected to the present apparatus. That is, drivers for e.g., the CD-ROM, semiconductor memory, magnetic memory or a magneto-optical memory may be provided and used as information sources.

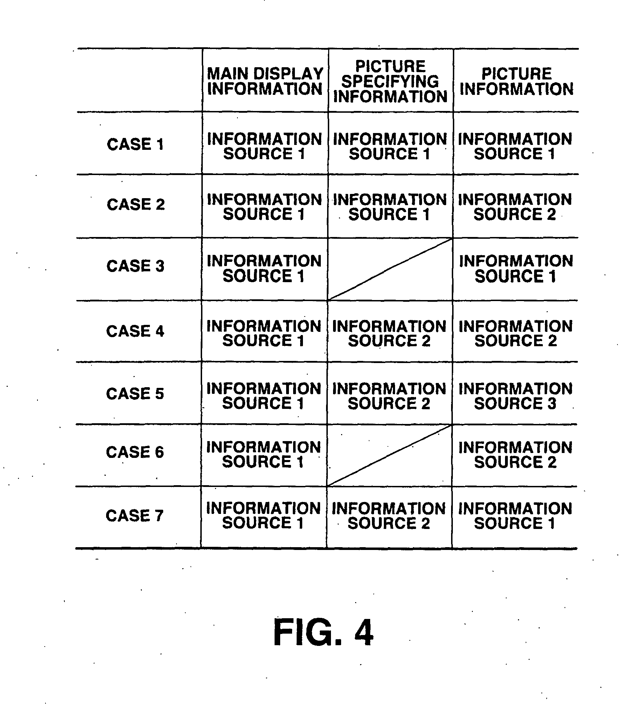

These variants are shown in Fig.4, in which none of the information sources 1 to 3 is definitive.

That is, the information sources 1 to 3 may be any one of the path over satellite, cable communication path, such as telephone network, radio communication path; such as WLL or a recording medium employing a solid-state memory.

In particular, if the main display information and the picture information source are recording mediums, it becomes possible to furnish commercial services. such as periodic delivery of the recording mediums to the viewer. In Fig.4, cases 1, 3 and 7 represent such case.

### (Third embodiment)

A third embodiment, corresponding to a modification of the first embodiment of the present invention, is hereinafter explained.

There are occasions wherein an information purveyor is desirous to register an icon, designed differently from the icon displayed on the information purveying frame as the first information management area in the one-touch frame as the second information management area. There are also occasions where the server is desirous to grasp the fact that the icon has been registered in the information display apparatus. In such case, a notification may be made to the communication unit 214 to the effect that another icon is to be acquired from a particular server, without directly transmitting the icon received from the first management area controller to the picture information recording unit 207. In giving a decision at this time whether the flag indicating whether the icon is to be directly transmitted or another icon is to be registered, it is a flag indicating whether or not a new icon is to be acquired from another server, as the related information to be included in the icon as the first picture information the flag is referenced in cooperation with the related information extraction unit 208 to decide the operation.

If another icon is newly acquired in performing the registration operation, an icon displayed in the information purveying frame and an icon displayed in the one-touch frame may advantageously be of a small area and a large area, respectively. If a request is made in the server to acquire a new icon, the server may select and send the icon in a preset sequence. If the related information included in the icon as the first picture information or the picture specifying information as the icon identifying information is included in the request to the server, it is possible to acquire the marketing information as to which icon information in the server has stimulated the viewer's interest satisfactorily and in detail. The sequence of icon decision in the server may also be furnished as at least two icons are selected with a proper probability.

By the above-described structure, it is possible for a server to offer services such as stake. Specifically, hit and miss may be assigned to one sort of icon and to the other sort of icon, respectively, and the hit-or-miss game may be played by performing a specified operation in the first management area. By providing such icon, another pastime may be afforded to the viewer.

### (Fourth embodiment)

A fourth embodiment of the present invention is hereinafter explained.

In the above-described first embodiment, the picture information recording unit 207 and the related information recording unit 209 are assumed to be independent recorded units. It is however possible to unify these recording units to effect recording as icons having the related information included therein. Of course, the related information extraction unit 208 is required even in such case.

However, it is unnecessary to startup the related information extraction unit 208 the instant the recording information acquisition unit 206 has received the first picture information, it being only necessary to boot it when the second management area controller 210 gives a decision on an operation which is based on the related information.

### (Fifth embodiment)

A fifth embodiment of the present invention, as a modification of the above-described first embodiment, is hereinafter explained.

In the first embodiment, the description is made on the assumption that the information purveying frame as the first management area and the one-touch frame as the second management area have respective independent areas. However, it is unnecessary for the main display information to be clearly separated from the first management area. That is, it is only the first management area controller 205 comprehends which of the icons is to be specified by the viewer. It is possible to display only the text and the icons on the display surface of the main display information in a form of superimposition. If such display is made, there is no necessity to change the configuration, it being only the operation of the display control unit 212 is changed to support the superimposition.

### (Other embodiment)

In the foregoing description, the function separation is made into modules. However, these functions may be independently constituted as hardware or may be implemented as software.

On the other hand, the term "connection" does not necessarily specify direct physical connection as hardware, such that, if connection is realized by software, it is only the information is sent unidirectionally or bi-directionally.

### Industrial Applicability

According to the present invention, as described above, a variety of information furnished by the information purveyor can be effectively put into order on the part of the viewer using an icon as a clue. On the part of the information purveyor, effective information purveying can be realized.

## Claims

1. An information display apparatus comprising:
an information extraction unit for extracting, from an information set including at least the main display information and a first picture, said main display information and said first picture; and
a display controller;
said display controller displaying a first management area for displaying a first picture, a second management area and the main display information extracted by said information extraction unit;
said display controller determining a second picture when an operator has specified a first picture, based on said first picture specified, to display said second picture in said second management area;
said display controller displaying the related information included in an information entity pertinent to said second picture when a specifying operation is performed on said second picture to make the related information selectable.

2. An information display apparatus comprising:
an information extraction unit for extracting, from an information set including at least the main display information, the information specifying a first picture and the first picture information, said main display information and said first picture specifying information, and for acquiring the first picture based on said first picture specifying information; and
a display controller;
said display controller displaying a first management area for displaying a first picture, a second management area and the main display information extracted by said information extraction unit, said display controller determining a second picture when an operator has specified a first picture, based on said first picture specified, to display said second picture in said second management area, said display controller displaying the related information included in an information entity pertinent to said second picture when a specifying operation is made on said second picture to render the related information selectable.

3. An information display apparatus comprising:
an information extraction unit for acquiring the main display information and the information specifying a first picture from a first information path and for acquiring the first picture from a second information path based on said first picture specifying information; and
a display controller;
said display controller displaying a first management area for displaying a first picture, a second management area and the main display information extracted by said information extraction unit;
said display controller determining a first picture when an operator has specified the first picture, based on said first picture specified, to display said second picture in said second management area;
said display controller displaying the related information included in an information entity pertinent to said second picture when a specifying operation is made on said second picture to render the related information selectable.

4. An information purveying apparatus for sending, in superposed state, the main display information and the information corresponding to said main display information and which is adapted for specifying a first picture including the related information therein, to an information display apparatus displaying a first management area for displaying a first picture, a second management area and the main display information, said information display apparatus determining a second picture when an operator has specified a first picture, based on said first picture specified, to display said second picture in said second management area, said information display apparatus displaying the related information included in an information entity pertinent to said second picture when a specifying operation is made on said second picture to render the related information selectable.
